Europäisches Patentamt

**European Patent Office**

Office européen des brevets

(11) Veröffentlichungsnummer: **0 141 230**
**B1**

(12) **EUROPÄISCHE PATENTSCHRIFT**

(45) Veröffentlichungstag der Patentschrift:
**16.09.87**

(51) Int. Cl.⁴: **H 02 M 1/12, H 02 J 3/18**

(21) Anmeldenummer: **84111264.2**

(22) Anmeldetag: **21.09.84**

(54) **Wechselstromfilterkreisanlage.**

(30) Priorität: **25.10.83 DE 3338629**

(43) Veröffentlichungstag der Anmeldung:
**15.05.85 Patentblatt 85/20**

(45) Bekanntmachung des Hinweises auf die Patenterteilung:
**16.09.87 Patentblatt 87/38**

(84) Benannte Vertragsstaaten:
**AT CH DE FR GB LI**

(56) Entgegenhaltungen:
**AT - B - 329 677**
**DE - A - 2 353 060**
**GB - A - 853 371**

**ELEKTROTECHNISCHE ZEITSCHRIFT ETZ, Band 102, Nr. 25, Dezember 1981, Berlin; W. FELDMANN et al. " HGÜ-Kurzkupplung", Seiten 1328-1331**

(73) Patentinhaber: **BBC Aktiengesellschaft Brown, Boveri & Cie., Haselstrasse, CH-5401 Baden (CH)**

(72) Erfinder: **Christl, Norbert, Wilermatten 571, CH-5300 Turgi (CH)**
Erfinder: **Sadek, Kadry, Dr., Silcherweg 5, D-7898 Lauchringen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei der Erfindung wird ausgegangen von einer Wechselstromfilterkreisanlage nach dem Oberbegriff des Patentanspruchs 1 und von einem Verfahren zur Filterung von Oberschwingungen in Stromversorgungsnetzen nach dem Oberbegriff des Patentanspruchs 4.

Mit dem Oberbegriff des Patentanspruchs 1 nimmt die Erfindung auf einen Stand der Technik von Wechselstromfilterkreisanlagen Bezug, wie er aus der AT-A-329 677 bekannt ist. Dort ist zwischen jedem Phasenleiter eines Drehstromnetzes und Erde je ein auf Harmonische niederer Ordnung und je ein auf Harmonische höherer Ordnung abgestimmtes Hochpassfilter geschaltet, um Oberschwingungsströme zu dämpfen, die von einer Stromrichterschaltung mit dreiphasiger Stromrichterbrücke herrühren. Ein Zu- oder Abschalten von Hochpassfiltern in Abhängigkeit vom Blindleistungsbedarf oder von Änderungen im Oberschwingungsgehalt ist nicht vorgesehen.

Mit dem Oberbegriff des Patentanspruchs 4 nimmt die Erfindung auf einen Stand der Technik von Verfahren zur Filterung von Oberschwingungen in Stromversorgungsnetzen Bezug, wie er aus der DE-A-2 353 060 bekannt ist. Dort ist zur Blindleistungskompensation oberschwingungshaltiger Niederspannungsnetze eine Wechselstromfilterkreisanlage mit mehreren parallgeschalteten Reihenschwingkreisen, jeweils bestehend aus der Serienschaltung einer Drossel mit einem Kondensator, vorgesehen. Diese Reihenschwingkreise sind auf Oberschwingungen der Netzfrequenz abgestimmte Saugkreise mit symmetrischen Dämpfungskennlinien. Um bei auf gleiche Oberschwingungen abgestimmten Saugkreisen etwa auftretende Parallelresonanzen zu dämpfen, sind Querverbindungen zwischen den Verbindungspunkten von Induktivität und Kondensator der Filterkreise mit gleicher Resonanzfrequenz herstellbar. Mit dieser Schaltungsart wird erreicht, dass schon bei Teillast Filterkreise verschiedener Kennfrequenz eingeschaltet sind. Bei der Herstellung der Querverbindung sind die auf gleiche Kennfrequenz abgestimmten Saugkreise an das Niederspannungsnetz angeschlossen. Eine Änderung der Kennfrequenz ist weder beabsichtigt noch wird sie dadurch bewirkt. Die Bandbreite der Saugkreise bleibt unverändert. Nachteilig ist, dass mehrere Saugkreise gleicher Kennfrequenz benötigt werden.

Stromrichteranlagen erzeugen eine Vielzahl von Stromoberschwingungen, die zu unerwünschten Verzerrungen der Wechsel- bzw. Drehspannung sowie zu Telefonstörungen Anlass geben können. Um dieses zu vermeiden, ist es üblich, abgestimmte und/oder breitbandige Filter an die Drehstromschiene anzuschliessen.

Eine zweite Eigenart eines Stromrichters ist sein Bedarf an Grundschwingungsblindleistung. Dieser ist abhängig von der übertragenen Wirkleistung sowie von der Aussteuerung der Stromrichterventile. In der Regel wird die Grundschwingungsblindleistung ganz oder teilweise durch geeignete Kompensationseinrichtungen zur Verfügung gestellt. Es bietet sich an, dazu mehrere, auf unterschiedliche Frequenzen abgestimmte Drehstromfilterkreise sowie – falls erforderlich – zusätzliche Kondensatorbatterien, welche parallel zum Stromrichter geschaltet sind, zu benutzen. Diese Kompensationseinrichtungen werden in Stufen geschaltet, um die Summenkompensationsleistung dem Blindleistungsbedarf des Stromrichters anzupassen.

Aufgrund dieser doppelten Funktion der Drehstromfilterkreise stellt sich die Problematik, dass z.B. bei Betrieb einer HGÜ-Kurzkupplung mit Teillast einerseits die Amplituden einiger Oberschwingungen zunehmen, andererseits aus Gründen der Blindleistungsbilanz die Abschaltung abgestimmter Filterkreise erforderlich wird. Speziell im unteren Teillastbereich einer HGÜ-Kupplung (unter 30% der Nennleistung) stellt sich das Problem der Betriebsführung mit teilweise abgeschalteten Filtern und erhöhtem Steuerwinkel. Die Vergrösserung des Steuerwinkels in diesem Lastbereich bewirkt in der Regel ein Ansteigen der in das Versorgungsnetz eingespeisten Stromoberschwingungen der Ordnung n = 23, 25, 35 und 37. Diese Ordnungszahlen gelten für eine 12pulsige GHÜ-Stromrichterschaltung.

Im Zusammenwirken mit dem oben beschriebenen Verlust an Filterwirkung im Teillastbereich können bei dieser Betriebsart Netzrückwirkungen sowie Telefonstörungen auftreten, welche übliche Grenzwerte zulässiger Einzelverzerrungen, die Gesamtverzerrung sowie Telefonstörfaktoren massgeblich überschreiten.

Der Erfindung liegt davon ausgehend die Aufgabe zugrunde, die Filterung von Oberschwingungen in einem Stromversorgungsnetz mit einfachen Massnahmen zu verbessern und eine auch zur Bereitstellung von Grundschwingungsblindleistung dienende Wechselstromfilterkreisanlage, insbesondere für Stromrichteranlagen, anzugeben, die auch im unteren Teillastbereich des zu übertragenden Stromes bei aus Gründen der Blindleistungsbilanz teilweise abgeschalteten Filtern eine gute Filterwirkung aufweist.

Diese Aufgabe wird durch die im Anspruch 1 und 4 gekennzeichneten Merkmale gelöst. Vorteilhafte Weiterbildungen der Erfindung sind in den abhängigen Ansprüchen definiert.

Die mit der Erfindung erzielbaren Vorteile bestehen insbesondere darin, dass infolge der durch einen bei Teillastbetrieb geschlossenen Kupplungsschalter bewirkten Parallelschaltung von Drossel und Widerstand eines abgeschalteten Filters zum in Betrieb befindlichen Wechselstromfilterkreis eine Verbesserung der Filterwirkung für die höheren Harmonischen erzielt wird. Insbesondere erhöhen sich die Resonanzfrequenzen sowie die Bandbreite des Filterkreises. Somit können die durch die höheren Harmonischen bewirkten Verzerrungen bei Teillastbetrieb ausreichend reduziert werden. Ausserdem wird die Rückwirkung auf nachrichtentechnische Einrichtungen wesentlich verkleinert.

Ein weiterer wesentlicher Vorteil der Erfindung ist darin begründet, dass bei Nachrüstung des Kupplungsschalters in bereits bestehenden Filterkreisanlagen die ursprüngliche Filterkreischarakteristik bei geöffnetem Kupplungsschalter erhalten bleibt.

Die Erfindung wird nachstehend anhand der in den Zeichnungen dargestellten Ausführungsform erläutert.

Es zeigen:

Fig. 1 das einpolige Prinzipschaltbild einer Drehstromfilterkreisanlage;

Fig. 2 die Impedanzcharakteristik der Drehstromfilterkreisanlage bei Teillast mit teilweise abgeschalteten Filtern.

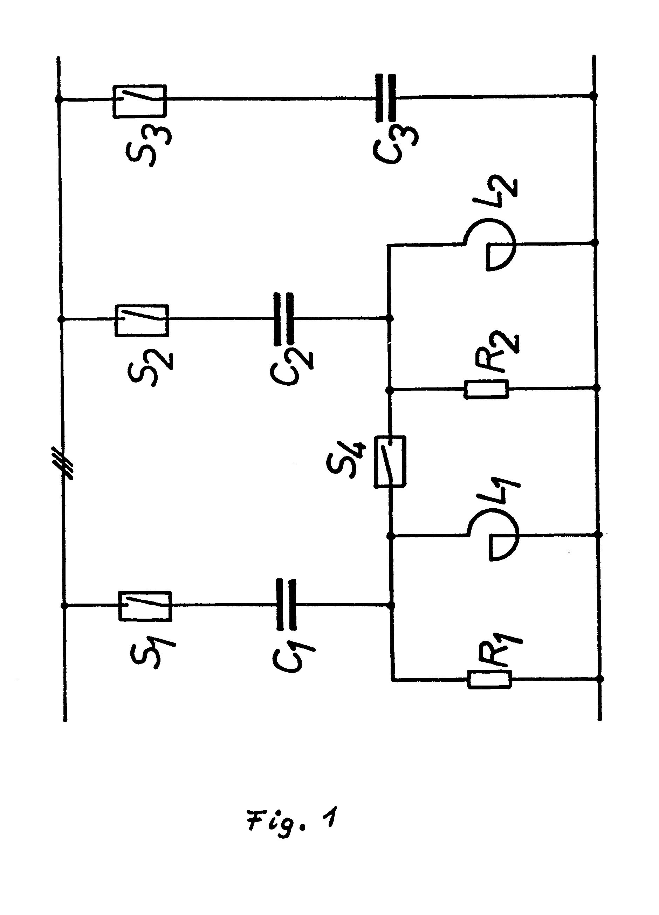

In Fig. 1 ist das einpolige Prinzipschaltbild einer Drehstromfilterkreisanlage für einen 12-Puls-Stromrichter einer HGÜ-Kurzkupplung dargestellt, welche sich aus je einem Hochpassfilter für die 11. Harmonische, einem zweiten Hochpassfilter für die 13. Harmonische sowie einer zusätzlichen Kondensatorbatterie zusammensetzt. Jede dieser Blindleistungseinheiten ist dreiphasig für ein Drittel der vom HGÜ-Stromrichter bei Nennleistung benötigten Blindleistung ausgelegt.

Im einzelnen besteht das Hochpassfilter für die 13. Harmonische aus einem Filterkreiskondensator C1, einer in Serie liegenden Filterkreisdrossel L1 sowie einem zur Drossel L1 parallel liegenden Dämpfungswiderstand R1. Die Zuschaltung des Hochpassfilters C1/L1/R1 an die Sammelmaschine erfolgt über einen mit dem Kondensator C1 verbundenen Schalter S1.

Das parallel zum Hochpassfilter C1/L1/R1 angeordnete Hochpassfilter für die 11. Harmonische besteht aus einem Filterkreiskondensator C2, einer in Serie liegenden Filterkreisdrossel L2 und einem zur Drossel L2 parallel geschalteten Dämpfungswiderstand R2. Die Zuschaltung des Hochpassfilters C2/L2/R2 an die Sammelschiene erfolgt über einen mit dem Kondensator C2 verbundenen Schalter S2.

Die zusätzliche, parallel zu den Hochpassfiltern liegende Kondensatorbatterie ist mit C3 bezeichnet und über einen Schalter S3 zuschaltbar.

Zwischen den gemeinsamen Verbindungspunkten von C1/L1/R1 einerseits und C2/L2/R2 andererseits ist (ebenfalls dreiphasig ausgeführt) ein Kupplungsschalter S4 angeordnet.

Die beschriebene Drehstromfilterkreisanlage hat eine doppelte Funktion zu erfüllen. Einerseits muss durch Abstimmung der Filterkreis-Resonanzfrequenzen auf die vom Stromrichter erzeugten Oberschwingungen dafür gesorgt werden, dass die Verzerrung der Netzspannung sowie die Telefonstörungen möglichst niedrig gehalten werden. Als charakteristische Oberschwingungen treten dabei insbesondere die 11. und die 13. Harmonische auf.

Andererseits haben die Drehstromfilterkreise die induktive Blindleistungsaufnahme des HGÜ-Stromrichters lastabhängig ganz oder teilweise zu kompensieren. Im Teillastbereich des HGÜ-Stromrichters wird hierzu durch Schliessen bzw. Öffnen der Schalter S1, S2 und S3 die Kompensationsblindleistung dem Blindleistungsbedarf des Stromrichters in Stufen von 33,3% der Kompensationsblindleistung bei Nennbetrieb angepasst, wobei bei vollem Blindleistungsbedarf (Nennbetrieb) alle Schalter S1, S2, S3 geschlossen sind, bei einem Blindleistungsbedarf von 66,6% des Bedarfs bei Nennbetrieb die Schalter S1 und S2 geschlossen und der Schalter S3 geöffnet ist sowie bei einem Blindleistungsbedarf von 33,3% des Bedarfs bei Nennbetrieb der Schalter S1 geschlossen ist und die Schalter S2, S3 geöffnet sind.

Aus diesen beiden Anforderungen ergibt sich die Problematik, dass bei Betrieb der HGÜ-Station mit kleiner Übertragungsleistung (z. B. bei 30% der Nennleistung) die in stärkerem Masse auftretenden höheren Harmonischen aufgrund der aus Gründen der Blindleistungsbilanz teilweise abgeschalteten Drehstromfilterkreise nicht mehr ausreichend gefiltert werden können. Dieses wird insbesondere durch den Betrieb des HGÜ-Stromrichters im untersten Teillastbereich dadurch erschwert, dass bei Vorgabe eines vergrösserten Steuerwinkels die Harmonischen der Ordnung $n = 23, 25, 35$ und 37 bei teilweise abgeschalteten Filtern wesentlich zu Telefonstörungen sowie zu Netzrückwirkungen im übergeordneten Versorgungsnetz beitragen.

Bei Betrieb der HGÜ-Kurzkupplung im untersten Teillastbereich mit geschlossenem Schalter S1 und geöffneten Schaltern S2 und S3 wird deshalb der Schalter S4 geschlossen.

Das Schliessen des Schalters S4 bewirkt bei gleichzeitig geöffnetem Schalter S2 und abgeschalteter Kondensatorbatterie C3 eine Parallelschaltung der Drosselspule L2 sowie des Dämpfungswiderstandes R2 des bei Teillast bereits abgeschalteten Hochpassfilters C2/L2/R2 zu der Filterdrosselspule L1 des noch in Betrieb befindlichen Hochpassfilters C1/L1/R1. Durch diese Parallelschaltung ergibt sich eine Verkleinerung der wirksamen Filterkreisinduktivität sowie des wirksamen Dämpfungswiderstandes des in Betrieb befindlichen Filters C1/L1/R1. Als Folge hieraus erhöht sich die Resonanzfrequenz des Filters (Verstimmung der ursprünglichen Resonanzfrequenz) und die Güte verkleinert sich. Dies hat gleichzeitig eine Vergrösserung der Bandbreite des Hochpassfilters zur Folge.

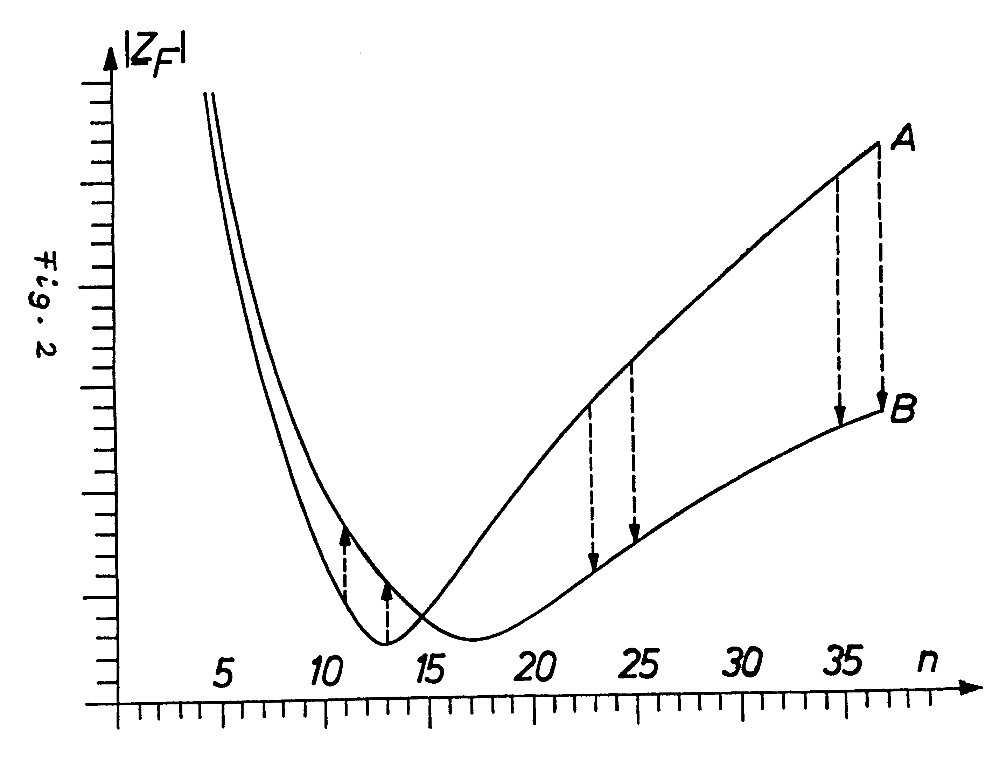

In Fig. 2 ist hierzu das frequenzabhängige Impedanzverhalten der Filterkreisanlage dargestellt. ($\mid ZF \mid$ = Absolutwert der komplexen Filterimpedanz; $n$ = Ordnungszahl der Harmonischen.) Die Kurve A gilt dabei für einen geschlossenen Schalter S1 bei gleichzeitig geöffneten Schaltern S2, S3, S4, während die Kurve B für geschlossene Schalter S1, S4 bei gleichzeitig geöffneten Schaltern S2, S3 gültig ist.

Wie aus Fig. 2 ersichtlich ist, verschiebt sich die Resonanzfrequenz von der 13. Harmonischen etwa zur 17. Harmonischen. Die Filterimpedanz $\mid ZF \mid$ vekleinert sich für die Harmonischen mit der Ordnungszahl $n > 15$ wesentlich, während sie sich für die Harmonischen mit der Ordnungszahl $n < 15$ geringfügig vergrössert.

Durch die Massnahme des Zuschaltens der Drosselspule L2 bzw. des Dämpfungswiderstandes R2 lassen sich die Einzelverzerrungen der höheren Harmonischen, die Gesamtverzerrung der Netzspannung sowie die Telefonstörfaktoren bei Betrieb einer HGÜ-Kurzkupplung von etwa 30% der Nennleistung bis zur Minimalleistung mit erhöhtem Steuerwinkel also wesentlich reduzieren. Der hierzu erforderliche Kupplungsschalter S4 stellt keinen wesentlichen Mehraufwand, gemessen an den Kosten für Filterkreiskondensatoren, Drosselspulen, Widerstände und Leistungsschalter der Filterkreise dar. Da dieser zusätzliche Schalter in den meisten Fällen nicht für die Netzspannung des speisenden Netzes, sondern für eine Reihenspannung im Bereich üblicher Mittelspannungsebenen auszulegen ist (ca. 30 bis 72,5 kV), sind keine grossen Platzerfordernisse für die Installation dieses Schalters erforderlich. Ein zusätzlicher Vorteil aufgrund des geringen Platzbedarfes ist darin zu sehen, dass dieser Schalter auch nachträglich in bereits existierende Filterkreisanlagen installiert werden kann und so eine verbesserte Filterwirkung bei Schwachlast ermöglicht, ohne die ursprüngliche Filtercharakteristik bei geöffnetem Kuppelschalter S4 zu verändern.

Da die maximalen Amplituden der Harmonischen der Ordnung n = 11 sowie n = 13 bei HGÜ-Kurzkupplungen etwa im Bereich 60% ... 70% der Nennleistung auftreten und die Filterwirkung der Hochpassfilter C1/L1/R1 und C2/L2/R2 bei geöffnetem Schalter S4 weiter bestehen bleibt, können die Oberschwingungen somit weiterhin in diesem Lastbereich ausreichend gefiltert werden.

Ein weiterer Vorteil beruht auf der Tatsache, dass in den Abgängen der abgestimmten Filter C1/L1/R1 bzw. C2/L2/R2 Kondensatoren gleicher Baugrösse und somit gleicher Kapazität vorgesehen sind. Bei geschlossenem Schalter S4 besitzt die in Fig. 1 dargestellte Anordnung wahlweise bei geöffnetem Schalter S1 und geschlossenem Schalter S2 dieselbe Impedanzcharakteristik wie bei geschlossenem Schalter S1 und geöffnetem Schalter S2. Diese Tatsache erhöht aufgrund der Redundanz der aus vielen einzelnen Kondensatorkannen bestehenden Filterkondensatoren die Betriebssicherheit der Filterkreisanlage und ermöglicht bei Teillast eine gelichmässig aufgeteilte Nutzungsdauer der Filterkondensatoren. Ferner wird vorteilhaft die Ersatzteilhaltung vereinfacht.

**Patentansprüche**

1. Wechselstromfilterkreisanlage, insbesondere Drehstromfilterkreisanlage für Stromrichteranlagen,
   a) mit mindestens zwei parallelgeschalteten Hochpassfiltern (C1, R1, L1; C2, R2, L2),
   b) die auf unterschiedliche Oberschwingungen des Wechselstromes abgestimmt sind,
   c) wobei in jedem Hochpassfilter eine Filterdrossel (L1, L2) zu einem Dämpfungswiderstand (R1, R2) parallelgeschaltet ist und
   d) in Reihe zu dieser Parallelschaltung ein Filterkreiskondensator (C1, C2) geschaltet ist, dadurch gekennzeichnet,

e) dass jeweils gemeinsame Verbindungspunkte von Filterkreiskondensator (C1, C2), Dämpfungswiderstand (R1, R2) und Filterdrossel (L1, L2) der auf unterschiedliche Oberschwinungen abgestimmten Hochpassfilter über einen Kupplungsschalter (S4) miteinander in Wirkverbindung stehen und
   f) dass mindestens ein Hochpassfilter (C2, L2, R2) über einen Schalter (S2) mit einer gemeinsamen Sammelschiene für die Hochpassfilter in Wirkverbindung steht.

2. Wechselstromfilterkreisanlage nach Anspruch 1, dadurch gekennzeichnet, dass die Kondensatoren (C1, C2) der Hochpassfilter jeweils die gleiche Kapazität aufweisen.

3. Wechselstromfilterkreisanlage nach Anspruch 1 oder 2, dadurch gekennzeichnet, dass der Filterkreiskondensator (C1, C2) mindestens eines Hochpassfilters über einen Schalter (S1, S2) mit der Sammelschiene in Wirkverbindung steht.

4. Verfahren zur Filterung von Oberschwingungen in einem Stromversorgungsnetz, insbesondere in einem Drehstromnetz mit mindestens einer HGÜ-Stromrichterschaltung,
   a) bei dem in Abhängigkeit vom Blindleistungsbedarf des Stromversorgungsnetzes und
   b) in Abhängigkeit von der erforderlichen Filterung
   c) auf unterschiedliche Oberschwingungen der Netzfrequenz abgestimmte Filter (C1, R1, L1; C2, R2, L2) an eine Sammelschiene des Stromversorgungsnetzes zu- oder abgeschaltet werden, wobei mit zunehmendem Blindleistungsbedarf Filter zugeschaltet und mit abnehmendem Blindleistungsbedarf Filter abgeschaltet werden,
   d) wobei ferner Querverbindungen (S4) zwischen den Verbindungspunkten von Filterdrossel (L1, L2) und Filterkreiskondensator (C1, C2) von Filtern herstellbar sind, dadurch gekennzeichnet,
   e) dass die Filter Hochpassfilter (C1, R1, L1; C2, R2, L2) sind, die zu den Filterdrosseln (L1, L2) parallelgeschaltete Dämpfungswiderstände (R1, R2) aufweisen, und
   f) dass in Abhängigkeit von einem abnehmenden Blindleistungsbedarf die Resonanzfrequenz mindestens eines in Betrieb befindlichen Hochpassfilters (C1, R1, L1) durch Herstellen einer Querverbindung zwischen dessen Verbindungspunkt von Filterdrossel (L1), Filterkreiskondensator (C1) und Dämpfungswiderstand (R1) zu mindestens einem derartigen Verbindungspunkt eines abgeschalteten Hochpassfilters (C2, R2, L2) zu höheren Frequenzen verschoben wird.

5. Verfahren nach Anspruch 4, dadurch gekennzeichnet, dass gleichzeitig mit dem Abschalten von Hochpassfiltern die Resonanzfequenz der in Betrieb befindlichen Hochpassfilter zu höheren Frequenzen verschoben und deren Bandbreite erhöht wird.

**Claims**

1. Alternating-current filter circuit system, particularly a three-phase filter circuit system for static converter systems,

a) comprising at least two parallel-connected high-pass filters (C1, R1, L1; C2, R2, L2)

b) which are tuned to different harmonics of the alternating current,

c) in which arrangement a filter choke (L1, L2) is connected in parallel with a damping resistor (R1, R2) in each high-pass filter, and

d) a filter circuit capacitor (C1, C2) is connected in series with this parallel circuit, characterized in that

e) in each case common junctions of filter circuit capacitor (C1, C2), damping resistor (R1, R2) and filter choke (L1, L2) of the high-pass filters tuned to different harmonics are effectively connected to each other via a coupling switch (S4) and

f) that at least one high-pass filter (C2, L2, R2) is effectively connected to a common bus bar for the high-pass filter via a switch (S2).

2. Alternating-current filter circuit system according to claim 1, characterized in that the capacitors (C1, C2) of the high-pass filters have in each case the same capacitance.

3. Alternating-current filter circuit system according to claim 1 or 2, characterized in that the filter circuit capacitor (C1, C2) of at least one high-pass filter is effectively connected to the bus bar via a switch (S1, S2).

4. Method for filtering harmonics in a power supply system, particularly in a three-phase system having at least one HDVC converter circuit,

a) in which, in dependence on reactive power requirement of the power supply system and

b) in dependence on the required filtering

c) filters (C1, R1, L1; C2, R2, L2) tuned to different harmonics of the system frequency are connected to or disconnected from a bus bar of the power supply system, filters being connected with increasing reactive power requirement and being disconnected with decreasing reactive power requirement,

d) in which arrangement, furthermore, crosslinks (S4) can be established between the junctions of filter choke (L1, L2) and filter circuit capacitor (C1, C2) of filters, characterized in that

e) the filters are high-pass filters (C1, R1, L1; C2, R2, L2) which have damping resistors (R1, R2) which are connected in parallel with the filter chokes (L1, L2) and that,

f) in dependence on a decreasing reactive power requirement, the resonant frequency of at least one high-pass filter (C1, R1, L1), which is in operation, is shifted towards higher frequencies by establishing a crosslink between its junction of filter choke (L1), filter circuit capacitor (C1) and damping resistor (R1) to at least one such junction of a disconnected high-pass filter (C2, R2, L2).

5. Method according to claim 4, characterized in that the resonant frequency of the high-pass filters, which are in operation, is shifted towards higher frequencies and their bandwidth is increased at the same time as high-pass filters are disconnected.

## Revendications

1. Installation à circuit de filtrage pour courant alternatif, en particulier installation triphasée à circuit de filtrage pour des installations de convertisseurs statiques,

a) comportant au moins deux filtres passe-haut connectés en parallèle (C1, R1, L1; C2, R2, L2),

b) qui sont accordés sur des oscillations harmoniques différentes du courant alternatif,

c) étant entendu que, dans chaque filtre passe-haut, une impédance de filtrage (L1, L2) est connectée en parallèle à une résistance d'amortissement (R1, R2), et

d) qu'un condensateur de circuit de filtrage (C1, C2) est connecté en série à ce montage en parallèle,
caractérisée en ce que

e) des points de jonction respectivement communs du condensateur de circuit de filtrage (C1, C2), de la résistance d'amortissement (R1, R2) et de l'impédance de filtrage (L1, L2) des filtres passe-haut accordés sur des oscillations harmoniques différentes sont en liaison active l'un avec l'autre par l'intermédiaire d'un interrupteur de couplage (S4), et

f) au moins un filtre passe-haut (C2, L2, R2) est en liaison active, par l'intermédiaire d'un interrupteur (S2), avec une barre omnibus commune pour les filtres passe-haut.

2. Installation à circuit de filtrage pour courant alternatif suivant la revendication 1, caractérisée en ce que les condensateurs (C1, C2) des filtres passe-haut présentent chaque fois la même capacité.

3. Installation à circuit de filtrage pour courant alternatif suivant la renvendication 1 ou 2, caractérisée en ce que le condensateur de circuit de filtrage (C1, C2) d'au moins un filtre passe-haut est en liaison active, par l'intermédiaire d'un interrupteur (S1, S2), avec une barre omnibus.

4. Procédé pour le filtrage des oscillations harmoniques dans un réseau d'alimentation, en particulier dans un réseau triphasé à l'aide d'au moins un circuit de convertisseur statique de système C.C.H.T.,

a) dans lequel, en fonction de la puissance réactive nécessaire du réseau d'alimentation, et

b) en fonction du filtrage requis,

c) des filtres (C1, R1, L1; C2, R2, L2) accordés sur des oscillations harmoniques différentes de la fréquence du réseau sont connectés à une barre omnibus du réseau d'alimentation ou sont déconnectés de celle-ci, étant entendu qu'à mesure que les besoins de puissance réactive augmentent, des filtres sont connectés et qu'à mesure que les besoins de puissance réactive diminuent, des filtres sont déconnectés,

d) des liaisons transversales (S4) pouvant, en outre, être établies entre les points de jonction d'inductances de filtrage (L1, L2) et de condensateurs de filtrage (C1, C2) de filtres,
caractérisé en ce que

e) les filtres sont des filtres passe-haut (C1, R1, L1; C2, R2, L2) qui comportent des résistances d'amortissement (R1, R2) connectées en parallèle aux inductances de filtrage (L1, L2), et

f) en fonction d'un besoin de puissance réactive décroissant, la fréquence de résonance d'au moins un filtre passe-haut se trouvant en service (C1, R1, L1) est déplacée vers des fréquences plus élevées par établissement d'une liaison transversale entre le point de jonction de l'impédance de filtrage (L1), du condensateur de circuit de filtrage (C1) et de la résistance d'amortissement (R1) et au moins un tel point de jonction d'un filtre passe-haut déconnecté (C2, R2, L2).

5. Procédé suivant la revendication 4, caractérisé en ce que, lors de la déconnexion de filtres passe-haut, la fréquence de résonance des filtres passe-haut se trouvant en service est déplacée vers des fréquences supérieures et leur largeur de bande est accrue.

Fig. 1

Fig. 2